# EUROPÄISCHE PATENTSCHRIFT

(11) **EP 1 702 154 B1**
(45) Veröffentlichungstag und Bekanntmachung des Hinweises auf die Patenterteilung: **23.03.2011**
(21) Anmeldenummer: 04804936.5
(22) Anmeldetag: 20.12.2004
(51) Int. Cl.: F02M 35/02, B01D 46/42, B29C 41/06

(54) **FILTERGEH USE UND HERSTELLVERFAHREN F R FILTERGEH USE**
FILTER HOUSING AND METHOD FOR PRODUCING SAID FILTER HOUSING
BOITIER DE FILTRE ET PROCEDE DE REALISATION

(30) Priorität: 20.12.2003 DE 10360230
(43) Veröffentlichungstag der Anmeldung: 20.09.2006
(73) Patentinhaber: MANN + HUMMEL GMBH, 71638 Ludwigsburg (DE)
(72) Erfinder: MAYER, Gerhard, 74385 Pleidelsheim (DE)
(86) Internationale Anmeldenummer: PCT/EP2004/053600
(87) Internationale Veröffentlichungsnummer: WO 2005/061880

(56) Entgegenhaltungen:
- EP-A- 0 726 389
- EP-A- 0 767 309
- US-A- 4 292 015

## Beschreibung

### Technisches Gebiet

Die vorliegende Erfindung betrifft ein Filtergehäuse und ein Herstellverfahren für ein Filtergehäuse. Insbesondere betrifft die Erfindung ein Filtergehäuse für einen Luftfilter für die Ansaugluft einer Brennkraftmaschine.

### Stand der Technik

Filtergehäuse werden typischerweise durch das Spritzgießverfahren hergestellt. Beim Spritzgießen werden dabei Ober- und Unterteil des Gehäuses mit getrennten Werkzeugen hergestellt. Die thermoplastischen Formmassen (Pulver, Körner, Würfel, Pasten etc.) werden dabei bis zur Verflüssigung (ca. 180°C) erwärmt und anschließend unter hohem Druck (bis 1400 bar) in geschlossene, zweiteilige, stählerne, wassergekühlte Werkzeughohlformen gespritzt, wo sie abkühlen und erstarren. Als Formmassen werden Polystyrol, Polyamide, Polyurethane, Celluloseether und -ester, Polyethylen, Polymethacrylsäureester und andere Thermoplaste, im Werkzeug aushärtende Duroplaste bzw. vulkanisierende Elastomere aus Kautschuk oder Siliconkautschuk und teilweise auch Schaumkunststoffe eingesetzt.

Bei Luftfiltergehäusen muss eine gute Abdichtung der beiden Gehäuseteile gewährleistet sein, damit keine ungereinigte Luft von dem Rohluftbereich in den Reinluftbereich einströmen kann. Aber auch bei anderen Anwendungen ist es zweckmäßig und vorteilhaft, ein Gehäuse möglichst luftdicht mit einem Deckel zu verschließen. Hierzu werden üblicherweise Dichtungen verwendet, die im Bereich der Kontaktfläche zwischen Deckel und Gehäuseschale angeordnet sind. Gerade bei Kunststoffgehäusen besteht die Gefahr, dass sich das Material beim Herstellen des Gehäuses verzieht, wobei die Toleranzen dabei unter Umständen Undichtigkeiten zwischen den beiden Gehäuseteilen hervorrufen können.

Die bisher bekannten Maßnahmen zur Vermeidung von Undichtigkeiten bestanden darin, dass die Teile im Dichtbereich verstärkt wurden, z. B. durch Materialanhäufungen oder durch den Einsatz von Versteifungselementen, die u. U. aus einem metallischen Material bestanden. Die Anwendung von Materialanhäufung führt jedoch dazu, dass gerade bei Kunststoff ein noch stärkerer Verzug eintritt. Die Verwendung von metallischen Versteifungselementen hingegen hat den Nachteil, dass ein Recycling des Kunststoffs nicht möglich ist bzw. in nicht unerheblichem Masse erschwert wird.

In der EP 0726389 B wurde daher bereits vorgeschlagen, ein Teil oder beide Kunststoffteile mit wenigstens einem allseitig geschlossenen Kanal zu versehen, welcher die Festigkeit sowie die maximale Biegespannung erhöht. Dieser Kanal wird dabei im Gasinnendruckverfahren hergestellt. Bei diesem Verfahren kann in einem einzigen Spritzgießvorgang zunächst das Kunststoffmaterial in die Spritzgießform eingebracht und anschließend durch die Spritzgießdüse oder durch eine weitere Düse Luft in den zu bildenden Kanal eingeblasen werden, wodurch sich ein luftführender Kanal ausbildet.

Auch dieses Verfahren bedingt jedoch aufgrund der Anwendung des Spritzgussverfahrens zwei getrennte Werkzeuge für Ober- und Unterteil des Filtergehäuses, wobei die Werkzeuge durch die Luftdüse sehr teuer sind.

Aus der EP 0767309 A1 ist ferner ein Verfahren zur Herstellung eines Dachventilatorgehäuses mittels Schleuderguß bekannt.

Aufgabe der vorliegenden Erfindung ist es daher, ein Filtergehäuse und Verfahren zur Herstellung von Filtergehäusen bereitzustellen, wobei das Filtergehäuse über eine ausreichende Dichtigkeit und Steifigkeit verfügt und mit Hilfe eines Werkzeugs einfach und kostengünstig herstellbar ist.

Diese Aufgabe wird durch die Merkmale des Anspruchs 1 gelöst. Offenbarung der Erfindung

Das erfindungsgemäße Filtergehäuse verfügt über ein oberes und ein unteres Gehäuseteil, wobei die beiden Gehäuseteile dichtend miteinander verbindbar sind. Die Verbindung der Gehäuseteile miteinander kann z. B. durch Schrauben oder Schnapphaken erzeugt sein, wobei selbstverständlich auch alle übrigen, im Stand der Technik bekannten Verbindungsarten verwendet werden können. Zwischen den Gehäuseteilen kann eine Dichtung angeordnet sein, welche die Abdichtung der Gehäuseteile erzeugt. Hierbei liegt die Dichtung an beiden Gehäuseteilen an. In das Filtergehäuse kann ein Filterelement eingesetzt werden, welches einen von dem Filtergehäuse umschlossenen Rohbereich dichtend von einem ebenfalls von dem Gehäuse umschlossenen Reinbereich trennt. Durch das Filterelement wird ein gasförmiges oder flüssiges Fluid gereinigt. Derartige Fluide können z. B. Luft für den Innenraum eines Kraftfahrzeugs oder die Ansaugluft für eine Brennkraftmaschine sein. Die Gehäuseteile sind im Schleudergussverfahren hergestellt, wobei sie über eine geometrisch definierte Außenseite und eine geometrisch undefinierte Innenseite verfügen. Die Außenseite verfügt durch einen direkten Werkzeugkontakt über relativ geringe Toleranzen. Die Innenseite des Gehäuseteils kontaktiert das Werkzeug während der Herstellung nicht, sie ergibt sich durch die Wandstärke und die Kontur der Außenseite. Daher verfügt die Innenseite über relativ große Toleranzen. Die geometrisch definierte Außenseite des einen Gehäuseteils ist mit der Außen- oder Innenseite des anderen Gehäuseteils verbunden. Hierbei verfügen die beiden Gehäuseteile über je einen Dichtbereich, welcher derart ausgestaltet ist, dass das jeweils andere Teil mit dem Dichtbereich kommunizieren kann. Vorzugsweise ist der Dichtbereich bei dem einen Gehäuseteil als Aufnahme und bei dem anderen Gehäuseteil als Einsatz ausgestaltet. Die Aufnahme kann sowohl durch die Außenseite, als auch durch die Innenseite gebildet sein. Der Einsatz ist der Bereich des Gehäuseteils, welcher in die Aufnahme eingreift. Dieser Einsatz kann ebenfalls durch die Außenseite und/oder die Innenseite gebildet sein. Somit wird eine ausreichende Dichtheit des Filtergehäuses erzielt. Da die Teile im Schleudergussverfahren hergestellt sind, sind die Werkzeugkosten nicht so hoch wie beim Spritzgussverfahren, was für Klein- und Kleinstserien vorteilhaft ist. Weiterhin können auch sehr großvolumige Gehäuseteile, wie z.B. Ansaugvorrichtungen von Nutzfahrzeugen, kostengünstig hergestellt werden.

Erfindungsgemäß ist das untere Gehäuseteil einteilig mit dem oberen Gehäuseteil im Schleuderguss hergestellt. Die beiden Gehäuseteile werden nach der Entnahme aus dem Werkzeug mechanisch voneinander getrennt. Hierbei kann auch ein Abfallstück zwischen den beiden Gehäuseteilen herausgetrennt werden. Der Vorteil dieser Ausgestaltung besteht darin, dass durch die gleichzeitige Herstellung beider Gehäuseteile einerseits die Herstellkosten geringer sind als bei zwei getrennten Arbeitsabläufen, andererseits sind die Geometrien der Außen- und Innenseite aufeinander abgestimmt, wodurch eine optimale Passform und somit Dichtheit erzielt wird.

Das erfindungsgemäße Verfahren zur Herstellung eines Filtergehäuses weist zumindest die Arbeitsschritte Einfüllen eines Kunststoffpulvers in eine Werkzeughohlform, Erhitzen, Rotieren, Abkühlen und Öffnen der Werkzeughohlform auf. Nach dem Öffnen der Werkzeughohlform wird das hergestellte Gehäuseteil entformt. Die hergestellten Gehäuseteile werden anschließend miteinander verbunden, wobei die Außenseite des einen Gehäuseteils mit der Außen- oder Innenseite des anderen Gehäuseteils verbunden wird. Durch dieses Verfahren sind Gehäuseteile mit geringen Kosten, guter Passform und somit Dichtheit herstellbar.

Beim Einfüllen des Kunststoffpulvers wird eine exakt dosierte Menge in die Werkzeughohlform eingebracht, wobei das Kunststoffpulver z. B. pulvrig oder körnig sein kann. Weiterhin kann das Kunststoffpulver auch über eine sonstige Konsistenz, z. B. flüssig, verfügen, welche als Kunststoffformmasse geeignet ist. Dem Kunststoffpulver können noch Füllstoffe, wie z. B. Ruß, Kohlefasern, Glaskugeln oder - fasern beigemischt sein, welche die mechanische Steifigkeit des zu erzeugenden Bauteils erhöhen bzw. die chemische Beständigkeit verbessern. Die Menge des einzubringenden Kunststoffpulvers richtet sich nach der Größe und der Wandstärke des zu erzeugenden Bauteils. Als Material für das Filtergehäuse eignet sich z. B. Polyamid. Dieses Material ist insbesondere für Filtergehäuse von Kraftfahrzeugen geeignet, da dieses Material preiswert und für die Bedingungen in Kraftfahrzeugen geeignet ist. Vor dem Einfüllen des Kunststoffpulvers kann die Werkzeughohlform mit einem Trennmittel besprüht oder bestrichen werden, damit das fertige Kunststoffteil leichter aus der Werkzeughohlform entnommen werden kann. Die Werkzeughohlform kann z. B. aus Aluminiumguss, Stahlblech oder elektrisch aufgebrachtem Nickel bzw. Kupfer bestehen. Die Werkzeughohlform, welche mit ihrer Innenfläche die Außenkontur des zu erzeugenden Bauteils bildet, wird erhitzt. Das Erhitzen kann durch eine, in die Werkzeughohlform integrierte Heizung oder durch die Wärmezuführung von außen erfolgen. Eine in die Werkzeughohlform, insbesondere die Wandung der Werkzeughohlform integrierte Heizung kann z. B. über Heizdrähte verfügen. Die Werkzeughohlform ist auf eine Temperatur zu erhitzen, bei welcher das eingefüllte Kunststoffpulver schmilzt und sich durch das Rotieren der Werkzeughohlform um die Polar- und Äquatorialachse auf der Innenfläche der Werkzeughohlform gleichmäßig verteilt. Hierbei kann die Werkzeughohlform z. B. mit ca. 5 Umdrehungen/min rotiert werden. Somit können nahezu gleichmäßige Wandstärken bei dem Bauteil erzeugt werden. Wenn das ganze Kunststoffpulver aufgeschmolzen und in der Werkzeughohlform gleichmäßig verteilt ist, wird die Werkzeughohlform wieder abgekühlt, so dass die Schmelze erstarren und das Bauteil bilden kann. Das Abkühlen der Werkzeughohlform ist derart zu steuern, dass das Bauteil gleichmäßig abgekühlt wird, wodurch ein zu großer Verzug durch die Schwindung vermieden wird. Wenn das Bauteil ausreichend abgekühlt ist, kann die Werkzeughohlform an dafür vorgesehenen Formtrennungen geöffnet und das Bauteil entnommen werden. Nach dem vollständigen Erkalten des Bauteils können die Gehäuseteile zu dem Filtergehäuse zusammenmontiert werden, wobei ggf. noch eine mechanische Bearbeitung der Gehäuseteile erfolgen kann. Eine derartige Bearbeitung kann z. B. die Erzeugung einer Öffnung für den Einlass oder Auslass des zu reinigenden Fluids sein. Bei der Montage wird die Außenseite des einen Bauteils auf die Innen- oder Außenseite des anderen Bauteils montiert, wodurch eine optimale Abdichtung der Bauteile zueinander erzielt wird.

Bauteile, welche im Schleudergussverfahren hergestellt sind, stehen während des Herstellungsvorgangs nur mit ihrer Außenseite in Kontakt mit der Werkzeughohlform. Die Innenseite des Bauteils verfügt über keinen direkten Kontakt zu der Werkzeughohlform, daher ergibt sich die Innenseite ohne eine definierte Formgebung.

Bei der erfindungsgemäßen Ausgestaltung des Verfahrens werden beide Gehäuseteile einteilig in einer einzigen Werkzeughohlform hergestellt. Nach dem Entformen des Gehäusegesamtteils wird dieses in zwei oder mehr Gehäuseteile getrennt. Durch diese Trennung werden die einzelnen Gehäuseteile erzeugt. Bei der Trennung der Gehäuseteile können Abfallstücke entstehen, welche bei der Herstellung des Gehäusegesamtteils die einzelnen Gehäuseteile verbunden haben. Diese Abfallstücke haben bei der Herstellung des Gesamtgehäuseteils lediglich die Aufgabe die beiden Gehäuseteile miteinander zu verbinden, wobei der Übergang zwischen den Gehäuseteilen derart ausgebildet ist, dass die in der Werkzeughohlform enthaltene Schmelze an jede Stelle fließen kann. Große Absätze sind hierbei zu vermeiden.

Es ist vorteilhaft, dass als Kunststoffpulver Polyethylen oder Polypropylen verwendet wird. Diese Materialien sind sehr preiswert und lassen sich einfach im Schleudergussverfahren verarbeiten. Weiterhin sind diese Materialien wasserresistent.

Bei einer besonderen Ausgestaltung der Erfindung werden die Gehäuseteile mit Spannhaken, Schrauben oder dergleichen miteinander verbunden. Durch die lösbare Verbindung der Gehäuseteile kann das in dem Filtergehäuse eingebrachte Filterelement einfach gewechselt werden.

### Kurze Beschreibung der Zeichnungen

Weitere Einzelheiten der Erfindung werden nachfolgend anhand der Figuren erläutert. Hierbei zeigt
- Figur 1: eine schematische Darstellung eines Gehäusegesamtteils im Schnitt,
- Figur 2: ein Filtergehäuse im Schnitt,
- Figur 3: ein doppelwandiges oberes Gehäuseteil im Schnitt und
- Figur 4: ein doppelwandiges unteres Gehäuseteil im Schnitt.

### Ausführungsform(en) der Erfindung

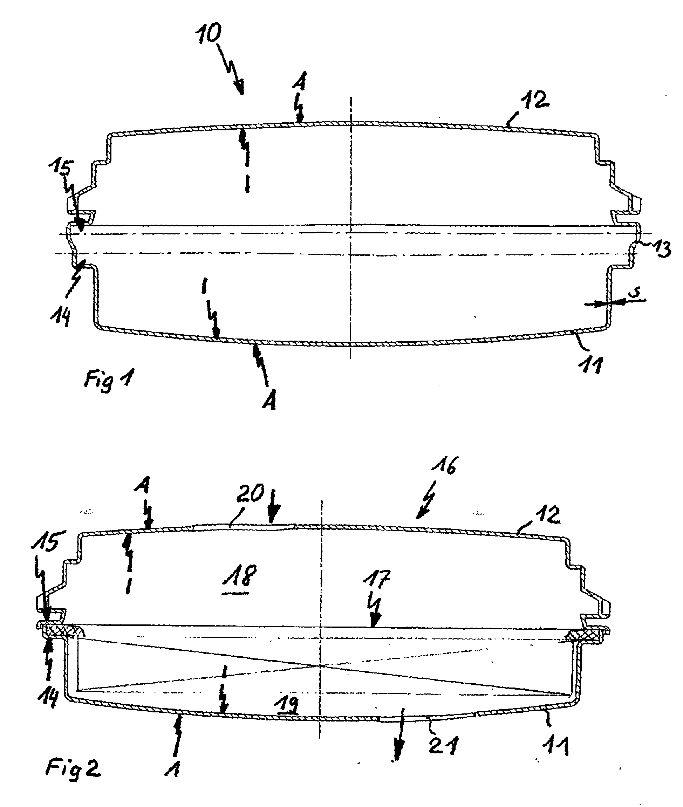

In Figur 1 ist ein Gehäusegesamtteil 10 im Schnitt dargestellt. Das Gehäusegesamtteil 10 ist in einer Werkzeughohlform (nicht dargestellt) einstückig als großes Hohlteil hergestellt, wobei es über eine Wandstärke s verfügt. Die Wandstärke s ist in dem Gehäusegesamtteil 10 nahezu konstant, wobei sie sich zwischen einer Außenseite A und einer Innenseite I erstreckt. Das Gehäusegesamtteil 10 verfügt über einen Bereich, welcher das untere Gehäuseteil 11 bildet. Ein anderer Bereich bildet das obere Gehäuseteil 12. Die beiden Gehäuseteile 11, 12 sind entlang der strich-punktierten Linie mit einem Abfallstück 13 verbunden. Die Geometrien der Gehäuseteile 11, 12 sind derart ausgelegt, dass diese nach dem Entfernen des Abfallstückes 13 ineinandergreifen und dichtend miteinander verbunden werden können. Hierzu weist das untere Gehäuseteil 11 einen Einsatz 14 auf, welcher geometrisch durch die Außenseite A des unteren Gehäuseteils 11 gebildet wird. Das obere Gehäuseteil 12 verfügt über eine Aufnahme 15, welche nach dem Entfernen des Abfallstückes 13 den Einsatz 14 aufnimmt. Die Aufnahme 15 wird geometrisch durch die Innenseite I des oberen Gehäuseteils 12 gebildet.

In Figur 2 ist ein Filtergehäuse 16 im Schnitt dargestellt. Der Figur 1 entsprechende Bauteile sind mit gleichen Bezugszeichen versehen. Das Filtergehäuse 16 verfügt über das obere Gehäuseteil 12 und das untere Gehäuseteil 11. In das untere Gehäuseteil 11 ist ein Filterelement 17 eingebracht. Das Filterelement 17 ist dichtend zwischen das untere Gehäuseteil 11 und das obere Gehäuseteil 12 eingebracht, wodurch ein Rohbereich 18 von einem Reinbereich 19 getrennt wird. Der Rohbereich 18 ist in dem oberen Gehäuseteil 12 angeordnet, wobei dieses über einen Einlass 20, welcher durch eine mechanische Bearbeitung in das obere Gehäuseteil 12 eingebracht wurde, verfügt. Der Reinbereich 19 ist in dem unteren Gehäuseteil 11 angeordnet, wobei das untere Gehäuseteil 11 über einen Auslass 21 verfügt, welcher ebenfalls durch eine mechanische Bearbeitung des unteren Gehäuseteils 11 erzeugt wurde. Der Einlass 20 bzw. Auslass 21 kann selbstverständlich auch durch eine spezielle Geometrie der Werkzeughohlform bei der Herstellung des Gehäuseteils gebildet werden. Das zu reinigende Fluid strömt in Pfeilrichtung durch den Einlass 20 in das Filtergehäuse 16 ein, wird durch das Filterelement 17 gereinigt und strömt anschließend durch den Auslass 21, ebenfalls in Pfeilrichtung, aus dem Filtergehäuse 16 wieder aus.

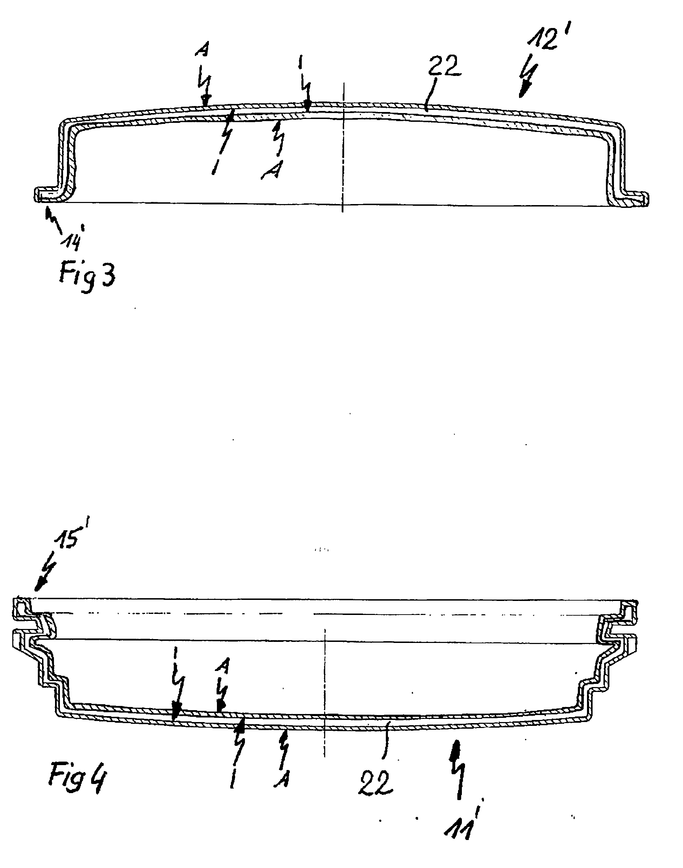

In Figur 3 ist ein doppelwandiges oberes Gehäuseteil 12' im Schnitt dargestellt. Bei diesem oberen Gehäuseteil 12' ist die Außenseite A derart ausgestaltet, dass sie die Innenseite I allseitig umschließt. Somit verfügt das obere Gehäuseteil 12' allseitig über eine, durch die Werkzeughohlform geometrisch definierte Außenseite A, welche über geringe Toleranzen verfügt. Durch diese geringen Toleranzen ist der Einsatz 14' geometrisch exakt definiert und unterliegt nicht den Wandstärkenschwankungen des Gehäuseteils 12'. Die Innenseite I umschließt ein abgeschlossenes Innenvolumen 22, welches nicht durchströmt wird. Dieses Innenvolumen 22 besitzt akustische Eigenschaften, welche die Ansauggeräusche einer Brennkraftmaschine dämpfen kann. Weiterhin besitzt dieses obere Gehäuseteil 12' durch seine doppelwandige Ausführung eine höhere Steifigkeit.

In Figur 4 ist das untere Gehäuseteil 11' dargestellt, welches ebenfalls doppelwandig ausgeführt ist. Der Figur 3 entsprechende Bauteile sind mit gleichen Bezugszeichen versehen, wobei die Ausführungen zur Außenseite A, Innenseite I und Innenvolumen 22 auch für das untere Gehäuseteil 11' gelten. Die Aufnahme 15' ist, wie der Einsatz 14' gemäß Figur 3, vollständig durch die Außenseite A gebildet. Somit verfügt die Aufnahme 15' über eine exakt geometrisch definierte Kontur. In diese Aufnahme 15' kann ein Filterelement (nicht dargestellt) eingesetzt und durch den Einsatz 14' des oberen Gehäuseteils 12' fixiert werden.

## Patentansprüche

1. Verfahren zur Herstellung eines Filtergehäuses mit Filterelement (17), aufweisend zumindest folgende Arbeitsschritte: Einfüllen eines Kunststoffpulvers in eine Werkzeughohlform, wobei die Werkzeughohlform dem herzustellenden Gehäuseteil entspricht, Erhitzen der Werkzeughohlform, Rotieren der Werkzeughohlform um die Äquatorial- und Polarachsen, Abkühlen und Öffnen der Werkzeughohlform, und Entformung des Gehäuseteils (11, 12), wobei die beiden Gehäuseteile (12) und (11) miteinander verbunden werden, wobei die Außenseite (A) zumindest eines Gehäuseteils (11, 12) mit der Außen- oder Innenseite (A), (I) des anderen Gehäuseteils (11, 12) verbunden wird,
**dadurch gekennzeichnet, dass** beide Gehäuseteile (11, 12) einteilig, bei einem Arbeitsgang hergestellt werden, wobei das Abkühlen so gesteuert wird, dass das Bauteil gleichmäßig abgekühlt wird und nach dem Entformen in zwei oder mehrere Teile getrennt werden, wobei die Gehäuseteile (11, 12) gebildet und anschließend die Gehäuseteile (11, 12) miteinander verbunden werden, derart, daß das Filterelement (17) dichtend zwischen das untere Gehäuseteil (11) und das obere Gehäuseteil (12) eingebracht wird, wodurch ein Rohbereich (18) von einem Reinbereich (19) getrennt wird.

2. Verfahren nach Anspruch 1, **dadurch gekennzeichnet, dass** zwischen den Gehäuseteilen (11, 12) ein Abfallstück (13) herausgetrennt wird.

3. Verfahren nach einem der vorhergehenden Ansprüche, **dadurch gekennzeichnet, dass** als Kunststoffpulver Polyethylen oder Polypropylen verwendet wird.

4. Verfahren nach einem der vorhergehenden Ansprüche, **dadurch gekennzeichnet, dass** die Gehäuseteile (11, 12) mit Spannhaken, Schrauben oder dgl. miteinander verbunden werden.

## Claims

1. Method for manufacturing a filter housing with filter element (17), featuring at least the following operations: filling of a synthetic powder into a hollow tool mold, the hollow tool mold corresponding to the housing component to be manufactured, heating of the hollow tool mold, rotating of the hollow tool mold around the equatorial and polar axes, cooling and opening of the hollow tool mold, and demolding of the housing component (11, 12), both housing components (12) and (11) being connected with each other, the exterior side (A) of at least one housing component (11, 12) being connected with the exterior or interior side (A), (I) of the other housing component (11, 12), **characterized in that** both housing components (11, 12) are manufactured in one piece in a single process step, the cooling being controlled such that the component is cooled uniformly and separated after the demolding process into two or more parts, the housing components (11, 12) being formed and then the housing components (11, 12) being connected with each other in such a way that the filter element (17) is inserted sealingly between the lower housing component (11) and the upper housing component (12), thus separating an unfiltered area (18) from a filtered area (19).

2. Method according to claim 1, **characterized in that** a waste part (13) is removed from between the housing components (11, 12).

3. Method according to one of the above claims, **characterized in that** polyethylene or polypropylene is used as synthetic powder.

4. Method according to one of the above claims, **characterized in that** the housing components (11, 12) are connected with each other by means of tension hooks, screws, or the like.

## Revendications

1. Procédé de fabrication d'un boîtier de filtre avec élément filtrant (17) se composant au moins des opérations suivantes: remplissage de poudre de matière plastique dans un moule creux d'outil, le moule creux d'outil correspondant à la partie de boîtier à fabriquer, chauffage du moule creux d'outil, rotation du moule creux d'outil autour des axes équatorial et polaire, refroidissement et ouverture du moule creux d'outil et démoulage de la partie de boîtier (11, 12), les deux parties de boîtier (12) et (11) étant reliées l'une à l'autre, la face extérieure (A) d'au moins une partie de boîtier (11, 12) étant reliée à la face extérieure ou la face intérieure (A), (I) de l'autre partie de boîtier (11, 12), **caractérisé en ce que** les deux parties de boîtier (11, 12) sont fabriquées en un bloc et en une seule opération, le refroidissement étant réalisé de manière à ce que la partie soit refroidie de façon uniforme et soit divisée en deux ou plusieurs parties après le démoulage, les parties de boîtier (11, 12) étant ainsi formées, puis les parties de boîtier (11, 12) étant reliées l'une à l'autre, de sorte que l'élément filtrant (17) soit mis en place de manière étanche entre la partie inférieure de boîtier (11) et la partie supérieure de boîtier (12) et qu'ainsi, une zone non-filtrée (18) soit séparée d'une zone filtrée (19).

2. Procédé selon la revendication 1, **caractérisé en ce qu'**une pièce de rebut (13) est extraite d'entre les parties de boîtier (11, 12).

3. Procédé selon l'une des revendications précédentes, **caractérisé en ce que** la poudre de matière plastique utilisée est un polyéthylène ou un polypropylène.

4. Procédé selon l'une des revendications précédentes, **caractérisé en ce que** les parties de boîtier (11, 12) sont reliées les unes aux autres au moyen de crochets, de vis ou d'autres éléments.
